# FASCICULE DE BREVET EUROPEEN

(11) **EP 1 744 426 B1**
(45) Date de publication et mention de la délivrance du brevet: **19.03.2008**
(21) Numéro de dépôt: 06291115.1
(22) Date de dépôt: 06.07.2006
(51) Int. Cl.: H02G 3/12

(54) **Coffret électrique comprenant deux éléments fixés l'un à l'autre au moyen d'un système à crémaillère**
Elektrischer Kasten bestehend aus zwei Elemente die mit einer Zahnstange zusammen befestigt sind
Electrical box comprising two elements fixed together by means of a toothed strap

(30) Priorité: 12.07.2005 FR 0507447
(43) Date de publication de la demande: 17.01.2007
(73) Titulaire: LEGRAND FRANCE, 87000 Limoges (FR); LEGRAND SNC, 87000 Limoges (FR)
(72) Inventeur: Araujo, Fernando, 87350 Panazol (FR)
(74) Mandataire: Orsini, Fabienne

(56) Documents cités:
- EP-A- 1 511 908
- GB-A- 2 257 847
- GB-A- 2 323 719

## Description

### DOMAINE TECHNIQUE AUQUEL SE RAPPORTE L'INVENTION

La présente invention concerne de manière générale les coffrets électriques à encastrer ou à rapporter en saillie sur une paroi tels que, dans le domaine tertiaire, les coffrets de distribution électrique et les appareils électriques du type interrupteur, va-et-vient ou prise de courant.

Elle concerne plus particulièrement un coffret électrique à fixer à une paroi quelconque comprenant un boîtier, un élément à rapporter sur ledit boîtier, et des moyens de fixation pour solidariser ledit élément audit boîtier.

### ARRIERE-PLAN TECHNOLOGIQUE

Actuellement, les coffrets électriques connus du type interrupteur, va-et-vient ou prise de courant à rapporter en saillie ou à encastrer sur une paroi comprennent généralement un boîtier qui accueille un mécanisme d'appareillage monté sur un élément appelé support d'appareillage rapporté et fixé sur le boîtier par divers moyens de fixation. Un coffret connu est divulgué par le document d'art antérieur GB-A-2 257 847.

En effet, par exemple, le support d'appareillage peut être fixé au boîtier au moyen de vis simples dont les têtes prennent appui sur ledit support et dont les corps filetés sont vissés dans des puits taraudés prévus dans le boîtier.

Autrement, le support d'appareillage peut être fixé au boîtier au moyen de griffes de fixation latérale actionnées par des vis de fixation engagées au travers dudit support. Les vis de fixation sont dans ce cas désignées sous le terme de vis de griffe. Lorsque les vis de griffe sont serrées sur ledit support, les griffes de fixation s'écartent et s'ancrent dans des cavités de réception du boîtier, maintenant ainsi ledit support sur le boîtier.

Enfin, le support d'appareillage peut être fixé au boîtier au moyen d'une combinaison de vis simples et de vis de griffe.

### OBJET DE L'INVENTION

La présente invention propose un nouveau moyen de fixation, simple d'utilisation, permettant avantageusement d'agencer deux éléments du coffret électrique à différentes positions l'un par rapport à l'autre.

Plus particulièrement, on propose selon l'invention, un coffret électrique tel que défini dans l'introduction, dans lequel il est prévu que lesdits moyens de fixation comprennent, d'une part, une crémaillère prévue sur une face intérieure d'une paroi latérale du boîtier, et, d'autre part, une vis quart-de-tour adaptée à être engagée dans un logement d'accueil dudit élément et comprenant au moins un cran apte à coopérer avec les crans de ladite crémaillère à différentes positions sur ladite crémaillère.

Ainsi, grâce à l'invention, les deux éléments du coffret électrique peuvent être rapportés l'un sur l'autre simplement et rapidement. En outre, ils peuvent être agencés à différentes hauteurs l'un par rapport à l'autre, permettant ainsi au coffret de s'adapter facilement à la géométrie de la paroi sur laquelle il est destiné à être fixé.

Par exemple, lorsque la paroi est un mur doublé d'une cloison d'isolation, on peut encastrer le boîtier du coffret électrique selon l'invention dans un trou d'encastrement pratiqué dans le mur en arrière de la cloison d'isolation et fixer au boîtier ledit élément au moyen du système à crémaillère de sorte que celui-ci prenne appui sur la face avant de la paroi d'isolation.

Selon une première caractéristique avantageuse du coffret conforme à l'invention, la vis quart-de-tour comprend plusieurs crans équidistants.

Ainsi, la liaison entre le boîtier et ledit élément est formée de plusieurs surfaces de contact entre la crémaillère et la vis quart-de-tour, rigidifiant ainsi cette liaison.

Selon une autre caractéristique avantageuse du coffret conforme à l'invention, la crémaillère s'étend sur toute la hauteur de ladite paroi latérale du boîtier.

Ainsi, la vis quart-de-tour, et par conséquent ledit élément à rapporter sur le boîtier, peuvent prendre de nombreuses positions par rapport à la crémaillère. Plus précisément, le débattement de l'élément par rapport au boîtier correspond alors théoriquement à la hauteur du boîtier ; la profondeur totale du coffret peut donc théoriquement être doublée.

Avantageusement, les surfaces d'appui des crans de la crémaillère sont disposées vers le fond du coffret et la surface d'appui de chaque cran de la vis quart-de-tour est disposée vers la face avant du coffret.

Selon une autre caractéristique avantageuse du coffret conforme à l'invention, la vis quart-de-tour comprend une tête comportant des moyens d'actionnement de ladite vis quart-de-tour et le logement d'accueil comprend un rebord d'appui de ladite tête.

Avantageusement alors, le logement d'accueil comprend, en arrière du rebord d'appui, un conduit ouvert latéralement par une fenêtre permettant à chaque cran de la vis quart-de-tour de coopérer avec les crans de la crémaillère.

Ainsi, ledit élément est maintenu contre la paroi en étant pris en sandwich, d'un côté, par la paroi elle-même, et de l'autre, par la vis quart-de-tour qui prend appui sur le rebord d'appui du logement.

En conséquence, que ce soit l'élément qui est fixé à la paroi ou le boîtier qui est encastré dans la paroi, l'élément et le boîtier forment un ensemble solide et immobile dans la paroi.

Selon une autre caractéristique avantageuse de l'invention, la vis quart-de-tour comprend un corps cylindrique pourvu à son extrémité d'un panneton cranté dont la largeur est égale au diamètre dudit corps cylindrique.

Ainsi, telle une clef, chaque vis quart-de-tour comporte une extrusion, le panneton, apte à coopérer avec la crémaillère disposée sur le boîtier lorsque l'installateur la fait pivoter d'un quart-de-tour. Par ailleurs, l'épaisseur du panneton étant importante, chaque cran de la vis quart-de-tour et les crans de la crémaillère ont une surface de contact importante, ce qui a pour effet de rigidifier la liaison entre le boîtier et ledit élément à rapporter sur ce boîtier.

Avantageusement, l'arête de chaque cran de la vis quart-de-tour est arrondie autour de l'axe du corps cylindrique de la vis quart-de-tour.

Avantageusement aussi, chaque cran de la vis quart-de-tour et les crans de la crémaillère sont chanfreinés.

Ainsi, les crans de la vis quart de tour peuvent s'engager librement dans ceux de la crémaillère en évitant que leurs faces latérales ne se bloquent lorsque les crans de la crémaillère et ceux de la vis quart-de-tour sont initialement décalés en hauteur les uns par rapport aux autres. En outre ces chanfreins permettent à chaque cran de la vis quart-de-tour de n'avoir qu'une face, la face droite non chanfreinée, en contact avec un cran de la crémaillère, les faces chanfreinées des crans restant libres de contact, ce qui évite aux crans de frotter excessivement les uns contre les autres.

Préférentiellement, le coffret selon l'invention constitue un coffret de distribution à fixer à une paroi quelconque dont l'élément forme des parois de fixation de platines d'appareillages.

Ainsi, un tel coffret de distribution destiné à contenir des disjoncteurs, des fusibles et des interrupteurs présente avantageusement une profondeur variable que l'on peut aisément adapter à la profondeur du trou d'encastrement pour libérer derrière les appareillages électriques rapportés sur les platines un espace maximum de câblage de façon à faciliter à l'installateur l'opération de câblage.

Selon une autre application avantageuse de l'invention, le coffret constitue un appareillage électrique à fixer à une paroi quelconque dont ledit élément forme un support d'appareillage destiné à porter une plaque enjoliveur et un socle de mécanisme d'appareillage.

Ainsi, ce type de conception de coffrets peut être appliqué, par exemple, aux interrupteurs, aux va-et-vient ou encore aux prises de courant à rapporter en saillie sur une paroi ou à encastrer sur une telle paroi.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :
- la figure 1 est une vue éclatée en perspective d'un premier mode de réalisation du coffret électrique selon l'invention ;
- la figure 2 est une vue de détail en perspective des moyens de fixation du coffret de la figure 1 ;
- la figure 3 est une vue schématique est une vue en perspective sous un autre angle de détail de la zone III de la figure 2 ;
- la figure 4 est une vue en perspective schématique de détail des moyens de fixation à crémaillère du coffret de la figure 1 ;
- la figure 5 est une vue éclatée en perspective d'un deuxième mode de réalisation du coffret selon l'invention ; et
- les figures 6A et 6B sont des vues en coupes du coffret de la figure 5 installé sur deux types différents de parois.

En préliminaire, on notera que les éléments identiques ou similaires des différents modes de réalisation représentés sur les différentes figures seront, dans la mesure du possible, référencés par les mêmes signes de références et ne seront pas décrits à chaque fois.

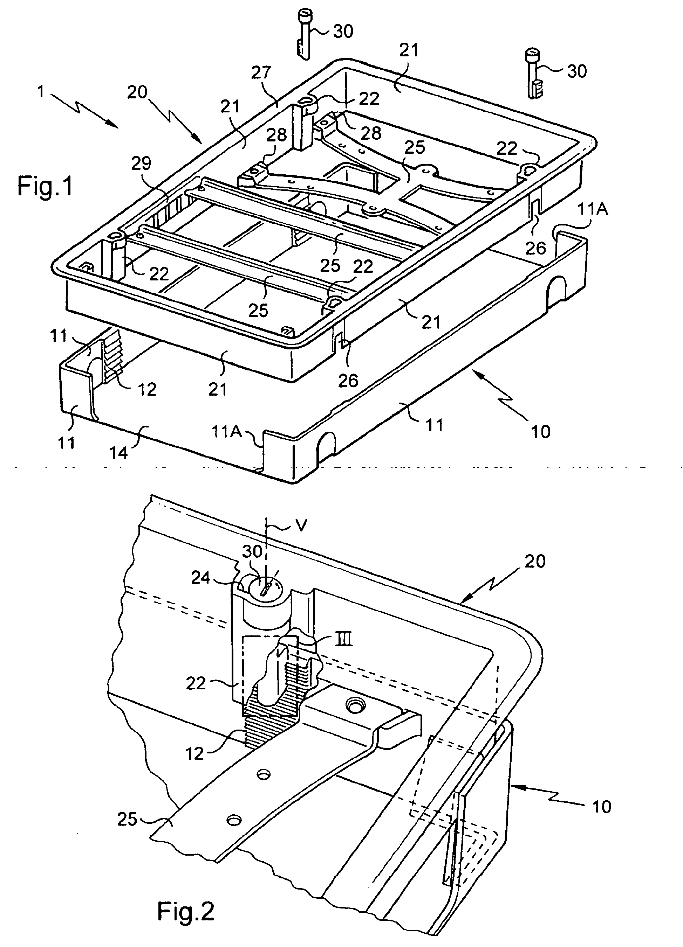

Sur les figures 1 à 6B, on a représenté deux modes de réalisation avantageux d'un coffret 1 électrique.

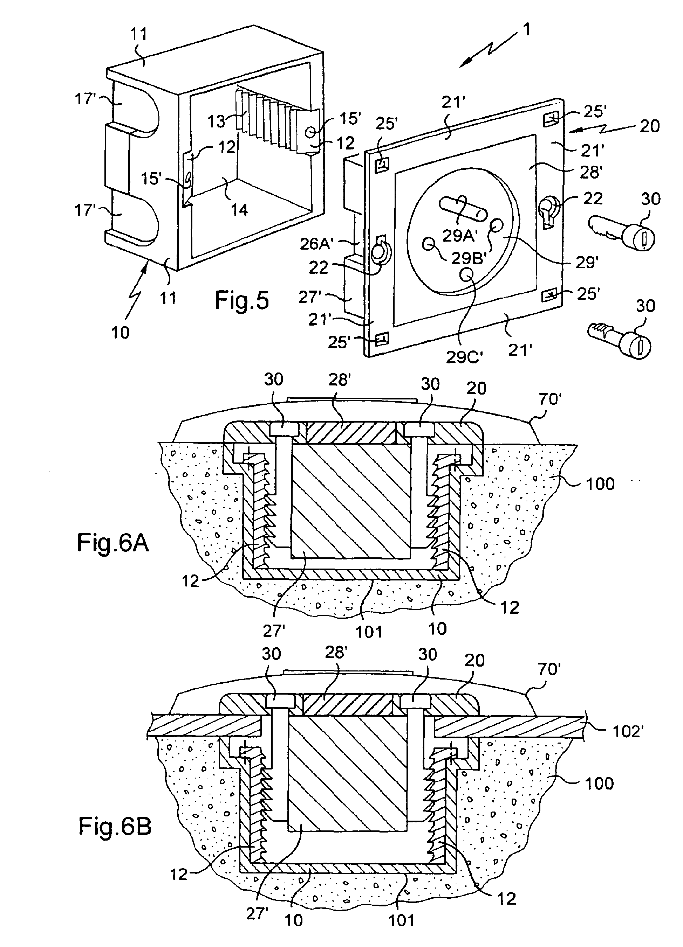

Le coffret 1 électrique est soit un coffret de distribution (voir figure 1) logeant et protégeant différents appareillages électriques tels que des disjoncteurs, des fusibles et des interrupteurs, soit un appareillage électrique (voir figure 5) logeant différents mécanismes d'appareillage tels que des mécanismes de prise de courant, d'interrupteur ou de va-et-vient.

Un tel coffret 1 peut être disposé verticalement, dans la profondeur d'un trou d'encastrement 101 réalisé dans une paroi 100. La longueur et la largeur de ce trou d'encastrement 101 sont déterminées par la longueur et la largeur du coffret 1.

Un tel coffret 1 peut également être rapporté en saillie sur une paroi quelconque.

Le coffret 1 comporte deux ensembles indépendants, à savoir un boîtier 10 ici destiné à être inséré et encastré dans le trou d'encastrement 101, et un élément 20 à rapporter sur le boîtier 10, en face avant du coffret 1, contre la paroi 100, ainsi que des moyens de fixation pour solidariser ledit élément 20 audit boîtier 10.

Plus précisément, le boîtier 10 comporte quatre parois latérales 11 et une paroi de fond 14 destinées ici à être positionnées contre les parois du trou d'encastrement 101.

Lesdits moyens de fixation comprennent, sur les faces intérieures de deux des parois latérales 11 en vis-à-vis du boîtier 10, des crémaillères 12 dont les crans 13 sont destinés à coopérer avec des vis quart-de-tour 30.

Ledit élément 20 comporte des logements 22 agencés pour accueillir les vis quart-de-tour 30. Ces vis sont destinées à solidariser ledit élément 20 au boîtier 10 en coopérant avec des crémaillères 12 solidaires du boîtier 10.

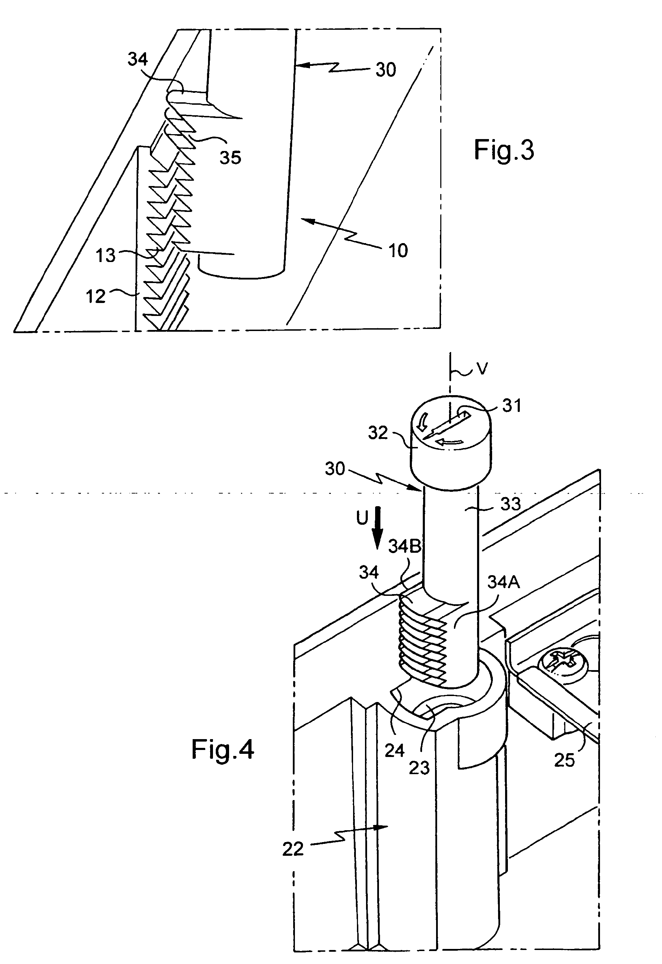

Comme le montrent plus précisément les figures 2 et 3, les crans 13 des crémaillères 12 du boîtier 10 sont répartis sur toute la hauteur des parois latérales 11 du boîtier 10, sont tournés vers l'intérieur dudit boîtier 10 et s'étendent le long de ladite paroi. Ils sont en outre chanfreinés sur leur face avant, tournée vers l'avant du coffret 1, de sorte qu'ils présentent un profil triangulaire.

Comme le montre plus particulièrement la figure 4, les vis quart-de-tour 30 comprennent quant à elles trois parties distinctes, une tête 32 de manoeuvre cylindrique et un corps cylindrique 33 qui porte, à son extrémité opposée à la tête 32, un panneton cranté 34. La tête 32 et le corps cylindrique 33 ont le même axe V.

La tête 32 présente, sur sa face avant accessible à l'usager, une fente 31 apte à coopérer avec un outil, par exemple un tournevis plat, pour faire pivoter la vis quart-de-tour 30 autour de son axe V. La hauteur de la tête 32 est faible relativement à la hauteur du corps cylindrique 33.

Le panneton cranté 34 est quant à lui une extrusion latérale du corps cylindrique 33. Ainsi, ce panneton cranté 34 présente en particulier deux faces latérales 34A,34B parallèles séparées d'une longueur correspondant au diamètre du corps cylindrique 33. La hauteur du panneton cranté 34 correspond sensiblement au tiers de la hauteur du corps cylindrique 33. L'extrémité de cette extrusion est crantée.

L'arête de chaque cran 35 est arrondie autour de l'axe V de la vis quart-de-tour 30. Ces crans 35, répartis sur toute la hauteur du panneton cranté 34, s'étendent dans un plan orthogonal à l'axe V de la vis quart-de-tour 30. Ils sont par ailleurs chanfreinés sur leur face arrière tournée vers l'extrémité de ladite vis, de sorte qu'ils présentent eux aussi un profil triangulaire.

Les crans 13,35 de la crémaillère 12 et de la vis quart-de-tour 30 sont donc aptes à coopérer ensemble. Leurs surfaces de contact sont celles disposées vers l'avant du coffret pour les crans 35 de la vis quart-de-tour 30 et vers le fond du coffret 1 pour les crans 13 de la crémaillère 12. Les chanfreins réalisés sur ces crans 12,35 permettent en particulier d'insérer sans forcer les crans les uns dans les autres même lorsqu'ils présentent initialement un décalage de hauteur.

Selon une caractéristique particulièrement avantageuse de l'invention, l'élément 20 peut prendre plusieurs positions par rapport au boîtier 10. De cette manière, avantageusement, lorsque le boîtier 10 est positionné dans la paroi 100 et lorsque l'élément 20 est positionné contre la paroi 100 en vis-à-vis du boîtier 10, quelque soit la distance séparant les deux éléments, il est possible de les solidariser l'un à l'autre.

Comme le montrent plus particulièrement les figures 2 et 4, les logements 22 destinés à accueillir chacun une vis quart-de-tour 30 présentent globalement la forme d'un conduit cylindrique d'axe V pourvu latéralement d'une rainure 24 destinée à permettre le passage du panneton cranté 34 lorsque la vis quart-de-tour 30 est insérée dans le logement 22 selon la direction U.

Chaque logement 22 présente par ailleurs, sur sa face avant, une embouchure de hauteur égale à la hauteur de la tête 32 de vis quart-de-tour 30 comprenant une section d'engagement apte à accueillir ladite tête 32. Puis la hauteur restante de la conduite présente un rétrécissement brutal de sa section formant un décrochement présentant un rebord d'appui 23 pour la tête 32.

Sur les figures 1 à 4, on a représenté un premier mode de réalisation du coffret 1 qui est ici un coffret de distribution destiné à recevoir des appareillages électriques tels que des disjoncteurs et des fusibles.

Dans ce mode de réalisation, l'élément 20 est un cadre 20 réalisé d'une seule pièce par moulage d'une matière plastique, à l'intérieur duquel sont fixées des platines 25 supportant lesdits appareillages électriques.

Plus précisément, dans ce mode de réalisation, le boîtier 10 comporte, parmi ses quatre parois latérales 11, deux parois destinées à être positionnées en haut et en bas du coffret 1 qui comprennent une ouverture 11A destinée au passage de câbles électriques pour le câblage des appareillages électriques. En outre, les deux autres parois latérales 11 du boîtier 10 portent chacune sur leur face intérieure deux crémaillères 12, telles que celles décrites précédemment, moulées avec le boîtier 10. Ces crémaillères 12 sont positionnées à proximité des quatre coins formés par les quatre parois latérales 11.

Le cadre 20 comporte quatre parois latérales 21 aptes à coulisser sur les parois latérales 11 du boîtier 10. La face avant de ces quatre parois latérales 21 est bordée d'un rebord périphérique 27 adapté à prendre appui sur la paroi 100.

Quatre logements 22 s'étendent par ailleurs sur toute la hauteur des faces intérieures de deux des parois latérales 21 du cadre 20. Ces logements 22 sont positionnés sur le cadre 20 de sorte que, lorsque ce dernier est inséré dans le boîtier 10, les logements 22 sont disposés en vis-à-vis des crémaillères 12.

Comme le montrent les figures 1 et 2, ces logements 22 s'étendent avantageusement sur toute la hauteur de ces deux parois latérales 21. Pour cela, l'embouchure de chaque logement 22 débouche sur le rebord périphérique 27 et ladite hauteur restante du logement 22 est ouverte latéralement par une fenêtre 26 disposée en vis-à-vis de la crémaillère 12 du boîtier 10. Cette fenêtre 26 permet aux crans 35 de la vis quart-de-tour 30 d'accéder à la crémaillère 12. La vis quart-de-tour 30 est donc guidée sur toute sa longueur par le logement 22.

Le cadre 20 porte par ailleurs intérieurement les platines 25 destinées à recevoir les appareillages électriques. Ces platines 25 présentent différentes formes de rails et sont disposées à des profondeurs diverses sur le cadre 20 selon le type d'appareillage électrique destiné à s'y fixer.

Comme le montre plus précisément la figure 1, ces platines 25 sont disposées entre deux parois latérales 21 du cadre 20. Pour cela, le cadre 20 porte, sur chacune des faces intérieures de ces deux parois latérales 11, d'une part, des excroissances 28 permettant la fixation d'une première grande platine 25 destinée à recevoir un disjoncteur principal, et, d'autre part, un rail longitudinal 29 permettant le montage d'une ou plusieurs platines transversales destinées à la fixation de fusibles et/ou des disjoncteurs secondaires.

L'espace entre ces platines 25 et le fond du boîtier 10 détermine l'espace de câblage des appareillages électriques.

Le cadre 20 pouvant, grâce à la coopération des vis quart-de-tour 30 et des crémaillères 12, prendre avantageusement plusieurs positions par rapport au boîtier 10, la profondeur du coffret 1 peut être précisément adaptée à la profondeur du trou d'encastrement 101 de façon à libérer un espace maximum de câblage des appareillages électriques.

Le coffret 1 étant composé d'un nombre réduit de pièces, son montage est simple et rapide.

L'installateur dispose en effet directement le boîtier 10 sur le cadre 20 puis engage cet ensemble dans le trou d'encastrement 101 réalisé dans la paroi 100 à laquelle on désire fixer le coffret 1. Il pousse manuellement l'ensemble de sorte que le rebord périphérique 27 du cadre 20 prenne appui sur la paroi 100 et de sorte que le fond 14 du boîtier 10 vienne en appui contre le fond du trou d'encastrement 101.

Afin d'assembler solidement le cadre 20 avec le boîtier 10, l'installateur insère une vis quart-de-tour 30 dans chaque logement 22. Cette insertion n'est réalisable que dans une seule position, le panneton cranté 34 devant être inséré dans l'encoche 24. L'installateur insère donc les vis quart-de-tour 30 dans les logements 22 jusqu'à ce que la tête 32 de chaque vis prenne appui sur le rebord d'appui 23 de son logement 22 associé. Faisant pivoter de 90° les vis quart-de-tour 30, l'installateur engage les crans 35 de ces vis dans les crans 13 des crémaillères 12. Le grand nombre de crans de chaque crémaillère 12 permet de positionner les vis quart-de-tour 30 et par conséquent le cadre 20 à la hauteur voulue.

Le boîtier 10 et le cadre 20 forment alors un ensemble rigide d'une hauteur correspondant sensiblement à la profondeur du trou d'encastrement 101.

Suite à cet encastrement, l'installateur peut câbler les divers appareillages électriques du coffret 1, achevant ainsi le montage du coffret 1.

Sur les figures 5 à 6B, on a représenté un deuxième mode de réalisation du coffret 1 qui est ici une prise de courant destinée à être fixée à une paroi 100. Elle est ici représentée encastrée dans la paroi 100 mais une telle prise de courant pourrait être rapportée en saillie de cette paroi 100.

Dans ce mode de réalisation, l'élément 20 est un support d'appareillage 20. Il est, à l'instar du boîtier 10, réalisé d'une seule pièce par moulage d'une matière plastique. Il présente la forme d'un cadre de faible épaisseur possédant une ouverture centrale carrée. Il possède donc quatre pans 21' destinés à prendre appui contre le bord du boîtier 10 (figure 6A) ou contre la face avant de la paroi 100 (figure 6B).

Comme le montre la figure 5, ce support d'appareillage 20 comporte des moyens d'encliquetage 25' disposés à chacun de ses coins et destinés à permettre la fixation d'une plaque de façade 70' qui prend appui contre la paroi 100. Ce support d'appareillage 20 possède aussi des moyens d'encliquetage (non représentés) d'un socle de mécanisme 27' de prise de courant sur lequel est vissée, au moyen d'une vis 29C', une plaque enjoliveur 28' comportant un puit 29' d'insertion d'une fiche (non représentée). Le fond du puit 29' est pourvu de trous 29B' d'insertion des broches de la fiche et laisse saillir la broche de terre 29A' du mécanisme de prise de courant.

Enfin, le support d'appareillage 20 comprend, au milieu de deux de ses pans 21' opposés, un logement 22 d'axe normal au plan de sa face avant. Ces logements 22 s'étendent dans l'épaisseur du support d'appareillage 20 et ne présentent donc pas une hauteur égale à celle d'une vis quart-de-tour 30. Ainsi, le corps cylindrique 33 de chaque vis quart-de-tour 30 insérée dans chaque logement 22 s'étend librement en dessous dudit support d'appareillage 20.

Le socle de mécanisme 27' présente une forme adaptée à laisser passer les vis quart-de-tour 30. Il présente ainsi en particulier un renfoncement 26A' sur deux de ses faces latérales en prolongement de chaque logement 22 du support d'appareillage 20. Ainsi, lorsque la vis quart-de-tour 30 est insérée dans son logement 22, elle fait saillie de la face arrière du support d'appareillage 20 et prend appui d'un côté sur le renfoncement 26A' de manière à être correctement maintenue contre la crémaillère 12.

Le boîtier 10 comprend quant à lui ici également quatre parois latérales 11 et une paroi de fond 14. Il est formé d'une seule pièce mais les deux crémaillères 12 qu'il porte sont moulées séparément. Elles sont fixées au boîtier 10 sur les faces intérieures de deux de ses parois latérales 11 opposées, au moyen de vis 15'.

Les parois latérales 11 du boîtier 10 comprennent par ailleurs, de manière connue en soi, des parties défonçables 17' pour former des ouvertures de passage de câbles électriques pour le câblage du mécanisme que le coffret 1 renferme.

Le support d'appareillage 20 peut donc, grâce à la coopération des vis quart-de-tour 30 et des crémaillères 12, être fixé au boîtier 10 à différentes hauteurs sur ce dernier. Le boîtier 10 peut alors avantageusement être disposé à différentes profondeurs dans le trou d'encastrement 101.

Comme le montre la figure 6A, pour le montage de ce coffret 1, l'installateur engage le boîtier 10 dans le trou d'encastrement 101 réalisé dans une paroi 100. Préférentiellement, cet engagement est réalisé de telle sorte que le boîtier 10 affleure à la surface de la paroi 100.

Puis, il visse la plaque enjoliveur 28' sur le socle de mécanisme 27'. Il encliquette ensuite ce premier ensemble sur le support d'appareillage 20 et câble les fils électriques qui sortent de la paroi 100. L'ensemble de ces pièces est ensuite disposé contre la paroi 100 de sorte que les logements 22 du support d'appareillage 20 soient placés à l'aplomb des crémaillères 12 du boîtier 10.

Afin d'assembler solidement le support d'appareillage 20 avec le boîtier 10, l'installateur insère les vis quart-de-tour 30 dans leur logement 22. Faisant pivoter les vis quart-de-tour 30, l'installateur engage les crans 35 de ces vis dans les crans 13 des crémaillères 12.

Comme le montrent les figures 6A et 6B, le grand nombre de crans 13 de chaque crémaillère 12 permet de positionner les vis quart-de-tour 30, et par conséquent le support d'appareillage 20, à la hauteur désirée par rapport au boîtier 10.

En particulier, lorsque la paroi 100 est un mur doublé d'une cloison d'isolation 102', le boîtier 10 peut être encastré en retrait de cette cloison d'isolation 102' afin d'être correctement maintenu dans le mur. Ce positionnement du boîtier 10 est rendu possible dans la mesure où le support d'appareillage 20 peut être positionné à distance du boîtier 10 tout en étant solidaire de ce dernier grâce aux vis quart-de-tour 30.

Enfin, l'installateur encliquette la plaque de façade 70' sur le support d'appareillage 20 de sorte que celle-ci prenne appui sur la face avant de la cloison d'isolation 102', achevant ainsi le montage du coffret 1.

## Revendications

1. Coffret (1) électrique à fixer à une paroi (100) quelconque comprenant un boîtier (10), un élément (20) de support d'appareillage à rapporter sur ledit boîtier (10), et des moyens de fixation pour solidariser ledit élément (20) audit boîtier (10), lesdits moyens de fixation comprennent, d'une part, une crémaillère (12) prévue sur une face intérieure d'une paroi latérale (11) du boîtier (10), et, **caractérisé en ce que** lesdit moyens de fixation comprennent d'autre part, une vis quart-de-tour (30) adaptée à être engagée dans un logement (22) d'accueil dudit élément (20) et comprenant au moins un cran (35) apte à coopérer avec les crans (13) de ladite crémaillère (12) à différentes positions sur ladite crémaillère (12).

2. Coffret (1) selon la revendication 1, **caractérisé en ce que** la vis quart-de-tour (30) comprend plusieurs crans (35) équidistants.

3. Coffret (1) selon l'une des revendications 1 ou 2, **caractérisé en ce que** la crémaillère (12) s'étend sur toute la hauteur de ladite paroi latérale (11) du boîtier (10).

4. Coffret (1) selon l'une des revendications 1 à 3, **caractérisé en ce que** les surfaces d'appui des crans (13) de la crémaillère (12) sont disposées vers le fond du coffret (10) et la surface d'appui de chaque cran (35) de la vis quart-de-tour (30) est disposée vers la face avant du coffret (10).

5. Coffret (1) selon l'une des revendications 1 à 4, **caractérisé en ce que** la vis quart-de-tour (30) comprend une tête (32) comportant des moyens d'actionnement (31) de ladite vis quart-de-tour (30) et le logement d'accueil (22) comprend un rebord d'appui (23) de ladite tête (32).

6. Coffret (1) selon la revendication 5, **caractérisé en ce que** le logement d'accueil (22) comprend, en arrière du rebord d'appui (23), un conduit ouvert latéralement par une fenêtre (26) permettant à chaque cran (35) de la vis quart-de-tour (30) de coopérer avec les crans (13) de la crémaillère (12).

7. Coffret (1) selon l'une des revendications 1 à 6, **caractérisé en ce que** la vis quart-de-tour (30) comprend un corps cylindrique (33) pourvu à son extrémité d'un panneton cranté (34) dont la largeur est égale au diamètre dudit corps cylindrique (33).

8. Coffret (1) selon la revendication 7, **caractérisé en ce que** l'arête de chaque cran (35) de la vis quart-de-tour (30) est arrondie autour de l'axe (V) du corps cylindrique (33) de la vis quart-de-tour (30).

9. Coffret (1) selon l'une des revendications 1 à 8, **caractérisé en ce que** chaque cran (35) de la vis quart-de-tour (30) et les crans (13) de la crémaillère (12) sont chanfreinés.

10. Coffret (1) selon l'une des revendications 1 à 9, **caractérisé en ce qu**'il constitue un coffret de distribution à fixer à une paroi quelconque (100) dont l'élément (20) forme des parois de fixation de platines d'appareillages (25).

11. Coffret (1) selon l'une des revendications 1 à 10, **caractérisé en ce qu**'il constitue un appareillage électrique à fixer à une paroi quelconque (100) dont l'élément (20) forme un support d'appareillage destiné à porter une plaque enjoliveur (28') et un socle de mécanisme (27') d'appareillage.

## Claims

1. An electrical box (1) for fixing to any wall (100), the box comprising a casing (10), a support element (10) for supporting an appliance for fitting on said casing (10), and fastener means for securing said element (20) to said casing (10), said fastener means comprising firstly a rack (12) provided on an inside face of a side wall (11) of the casing (10), and being **characterized in that** said fastener means comprise secondly a quarter-turn screw (30) suitable for being engaged in a housing (22) for receiving said element (20) and including at least one tooth (35) suitable for co-operating with the teeth (13) of said rack (12) in different positions on said rack (12).

2. A box (1) according to claim 1, **characterized in that** the quarter-turn screw (30) has a plurality of teeth (35) that are equidistant.

3. A box (1) according to claim 1 or claim 2, **characterized in that** the rack (12) extends over the full height of said side wall (11) of the casing (10).

4. A box (1) according to any one of claims 1 to 3, **characterized in that** the bearing surfaces of the teeth (13) of the rack (12) face towards the bottom of the box (10) and the bearing surface of the or each tooth (35) of the quarter-screw turn (30) faces towards the front face of the casing (10).

5. A box (1) according to any one of claims 1 to 4, **characterized in that** the quarter-turn screw (30) has a head (32) including actuator means (31) for actuating said quarter-turn screw (30), and the receiver housing (22) includes a bearing rim (23) for said head (32).

6. A box (1) according to claim 5, **characterized in that** the receiver housing (22) includes, behind the bearing rim (23), a duct that is open laterally via a window (26) enabling each tooth (35) of the quarter-turn screw (30) to cooperate with the teeth (13) of the rack (12).

7. A box (1) according to any one of claims 1 to 6, **characterized in that** the quarter-turn screw (30) comprises a cylindrical shank (33) provided at its end with a toothed lug (34) of width equal to the diameter of said cylindrical body (33).

8. A box (1) according to claim 7, **characterized in that** the tip of each tooth (35) of the quarter-turn screw (30) is rounded about the axis (V) of the cylindrical shank (33) of the quarter-turn screw (30).

9. A box (1) according to any one of claims 1 to 8, **characterized in that** the or each tooth (35) of the quarter-turn screw (30) and the teeth (13) of the rack (12) are chamfered.

10. A box (1) according to any one of claims 1 to 9, **characterized in that** it constitutes a distribution box for fastening to any wall (100) in which the element (20) forms walls for fastening appliance plates (25).

11. A box (1) according to any one of claims 1 to 10, **characterized in that** it constitutes an electrical appliance for fastening to any wall (100) in which the element (20) forms an appliance support for carrying a cover plate (28') and a mechanism base (27') of an appliance.

## Patentansprüche

1. Schaltkasten (1), der an einer beliebigen Wand (100) zu befestigen ist, mit einem Gehäuse (10), mit einem Geräte-Trägerelement (20), das auf das Gehäuse (10) aufzusetzen ist, und mit Befestigungseinrichtungen, um das Element (20) fest mit dem Gehäuse (10) zu verbinden, wobei die Befestigungseinrichtungen einerseits eine Zahnstange (12) aufweisen, die auf einer Innenseite einer Seitenwand (11) des Gehäuses (10) vorgesehen ist, und **dadurch gekennzeichnet, dass** die Befestigungseinrichtungen andererseits eine Drehschraube (30) aufweisen, die geeignet ist, um in eine Aufnahme (22) des Elements (20) eingeführt zu werden und mindestens eine Raste (35) aufweist, die in der Lage ist, mit den Rasten (13) der Zahnstange (12) in verschiedenen Positionen auf der Zahnstange (12) zusammenzuwirken.

2. Kasten (1) nach Anspruch 1, **dadurch gekennzeichnet, dass** die Drehschraube (30) mehrere Rasten (35) mit gleichem Abstand aufweist.

3. Kasten (1) nach einem der Ansprüche 1 oder 2, **dadurch gekennzeichnet, dass** die Zahnstange (12) sich über die ganze Höhe der Seitenwand (11) des Gehäuses (10) erstreckt.

4. Kasten (1) nach einem der Ansprüche 1 bis 3, **dadurch gekennzeichnet, dass** die Auflageflächen der Rasten (13) der Zahnstange (12) zum Boden des Kastens (10) hin angeordnet sind und die Auflagefläche jeder Raste (35) der Drehschraube (30) zur Vorderseite des Kastens (10) angeordnet ist.

5. Kasten (1) nach einem der Ansprüche 1 bis 4, **dadurch gekennzeichnet, dass** die Drehschraube (30) einen Kopf (32') aufweist, der Betätigungsmittel (31) der Drehschraube (30) aufweist, und die Aufnahme (22) eine Auflagerandleiste (23) für den Kopf (32) aufweist.

6. Kasten (1) nach Anspruch 5, **dadurch gekennzeichnet, dass** die Aufnahme (22) an der Rückseite der Auflagerandleiste (23) einen seitlich über ein Fenster (26) offenen Kanal aufweist, der es jeder Raste (35) der Drehschraube (30) erlaubt, mit den Rasten (13) der Zahnstange (12) zusammenzuwirken.

7. Kasten (1) nach einem der Ansprüche 1 bis 6, **dadurch gekennzeichnet, dass** die Drehschraube (30) einen zylindrischen Körper (33) aufweist, der an seinem Ende mit einem gezahnten Bart (34) versehen ist, dessen Breite gleich dem Durchmesser des zylindrischen Körpers (33) ist.

8. Kasten (1) nach Anspruch 7, **dadurch gekennzeichnet, dass** der Grat jeder Raste (35) der Drehschraube (30) um die Achse (V) des zylindrischen Körpers (33) der Drehschraube (30) abgerundet ist.

9. Kasten (1) nach einem der Ansprüche 1 bis 8, **dadurch gekennzeichnet, dass** jede Raste (35) der Drehschraube (30) und die Rasten (13) der Zahnstange (12) abgeschrägt sind.

10. Kasten (1) nach einem der Ansprüche 1 bis 9, **dadurch gekennzeichnet, dass** er einen Verteilerkasten bildet, der an einer beliebigen Wand (100) zu befestigen ist, dessen Element (20) Befestigungswände für Geräteplatinen (25) bildet.

11. Kasten (1) nach einem der Ansprüche 1 bis 10, **dadurch gekennzeichnet, dass** er ein Elektrogerät bildet, das an einer beliebigen Wand (100) zu befestigen ist, dessen Element (20) einen Geräteträger bildet, der dazu bestimmt ist, eine Zierblendenplatte (28') und einen Gerätesockel (27') zu tragen.
